Europäisches Patentamt

**European Patent Office** (11) Numéro de publication: **0 028 860**

Office européen des brevets **A1**

(12) **DEMANDE DE BREVET EUROPEEN**

(21) Numéro de dépôt: **80201046.2**

(22) Date de dépôt: **05.11.80**

(51) Int. Cl.³: **B 60 R 1/08**

(30) Priorité: **09.11.79 BE 46994**

(43) Date de publication de la demande:
**20.05.81 Bulletin 81/20**

(84) Etats Contractants Désignés:
**AT CH DE FR GB IT LI LU NL SE**

(71) Demandeur: **Guillaume, André**
**28, Strijderslaan**
**B-3400 Landen(BE)**

(72) Inventeur: **Guillaume, André**
**28, Strijderslaan**
**B-3400 Landen(BE)**

(74) Mandataire: **Dellicour, Paul**
**18/012 rue Fabry**
**B-4000 Liege(BE)**

(54) **Perfectionnement aux rétroviseurs extérieurs.**

(57) Le rétroviseur est constitué de deux miroirs plans (1, 2) de forme substantiellement rectangulaire, superposés et montés chacun de manière à permettre un réglage indépendant pour supprimer l'angle mort du véhicule.

Chacun des miroirs (1, 2) est monté sur une articulation à rotule (3, 4) et le réglage indépendant peut se faire, suivant les réalisations, de l'extérieur ou de l'intérieur du véhicule.

FIG.2

EP 0 028 860 A1

- 1 -

Perfectionnement aux rétroviseurs extérieurs

La présente invention concerne les rétroviseurs extérieurs orientables, particulièrement pour véhicules
automobiles, et a pour but de réaliser un rétroviseur
supprimant l'angle mort du véhicule.

Dans les rétroviseurs courants, placés particulièrement
sur la portière avant gauche du véhicule pour permettre
au conducteur de voir par réflexion le véhicule qui
s'apprête à doubler, il existe le danger de l'angle
mort, c'est-à-dire qu'il existe le moment où le véhicule
encore légèrement en retrait n'est plus aperçu dans le
rétroviseur et n'est pas encore visible par le conducteur simplement à travers la vitre de sa portière. Cet
angle mort est particulièrement dangereux, lorsque les
vitesses étant réglementées les deux véhicules roulent à
peu près à la même allure maximale permise. On a ainsi,
par exemple, fait la constatation qu'un véhicule à dépasser parcourt une distance d'environ 15 m entre le
moment où son conducteur ne voit plus de véhicule dans
son rétroviseur courant et le moment où il l'aperçoit à
nouveau par la vitre dans son champ de vision.

Des rétroviseurs à miroir bombé tendent de remédier à
cet inconvénient, mais ils sont souvent source d'erreurs
dans l'appréciation des distances. D'autre part, des
rétroviseurs à deux miroirs existent et tendent à supprimer l'angle mort mais, ces miroirs étant solidaires entre eux, lors d'un réglage le basculement est uniforme pour les deux miroirs et le défaut n'est pas supprimé.

Suivant l'invention, il a paru avantageux de créer un rétroviseur extérieur orientable, caractérisé en ce qu'il est constitué de deux miroirs plans, de forme substantiellement rectangulaire, superposés et montés chacun de manière à permettre un réglage indépendant.

Suivant une réalisation, chacun des miroirs est monté sur une articulation à rotule et le réglage s'effectue individuellement par simple poussée sur un ou les miroirs.

Suivant une autre réalisation, chacun des mimoirs est monté sur une articulation à rotule vers son bord externe et est pourvu vers son bord interne d'un organe de commande de pivotement relié à une tringle se prolongeant à l'intérieur du véhicule.

Pour mieux faire comprendre l'invention, celle-ci est décrite ci-après sur la base des dessins annexés, à titre d'exemples uniquement, montrant en :
Figure 1 une vue en perspective de l'arrière d'un rétroviseur conforme à l'invention, monté sur un bras de rétroviseur de type courant ;
Figure 2 une vue en perspective de l'avant du rétroviseur de figure 1 ;
Figure 3 une vue en perspective de l'arrière d'une autre réalisation d'un rétroviseur suivant l'invention à monter directement sur la portière du véhicule pour un réglage par l'intérieur de celui-ci, avec un éclaté de l'organe de commande de pivotement de chacun des miroirs, et
Figure 4 une vue en perspective de l'avant du rétroviseur de figure 3, avec également un éclaté de l'organe de com-

- 3 -

mande de pivotement.

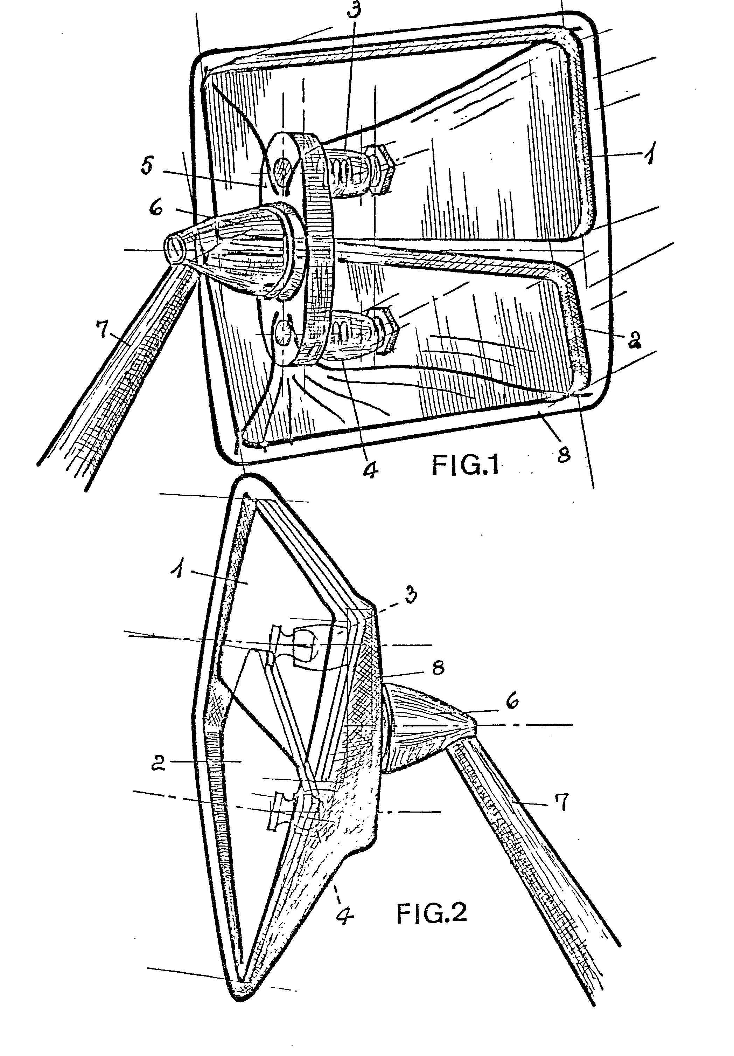

Comme on le voit aux dessins, en figures 1 et 2, un rétroviseur réalisé suivant l'invention est constitué de deux miroirs plans 1, 2 de forme substantiellement rectangulaire. Ces deux miroirs sont superposés et montés chacun sur une articulation à rotule 3, respectivement 4, ces articulations étant portées par un support commun 5.

Le support commun 5 avec ses deux miroirs peut être lui-même monté sur une articulation à rotule 6, par exemple du type prévu sur des rétroviseurs courants, dont le bras 7 est fixé sur la portière du véhicule.

L'ensemble du support 5 avec les miroirs 1, 2 et les articulations 3, 4 est avantageusement enfermé dans un carénage approprié 8, comme il est visible aux dessins.

Un premier réglage général est obtenu par l'articulation à rotule externe 6 et, ensuite, un réglage individuel des miroirs 1, 2 sur les articulations à rotule 3, respectivement 4, par simple poussée permet sans difficulté de mettre les miroirs en position, de manière à obtenir d'un miroir à l'autre une vision constante du véhicule jusqu'à la fin du dépassement. On voit clairement aux dessins que les miroirs pivotent indépendamment l'un de l'autre et doivent donc être réglés séparément.

L'angle mort est complètement couvert avec un tel rétroviseur et on pourrait même se passer du rétroviseur intérieur du véhicule.

Un rétroviseur suivant l'invention, réglable de l'extérieur, peut être monté sur le bras d'un rétroviseur cou-

- 4 -

rant déjà fixé au véhicule et s'adapter ainsi à tous véhicules.

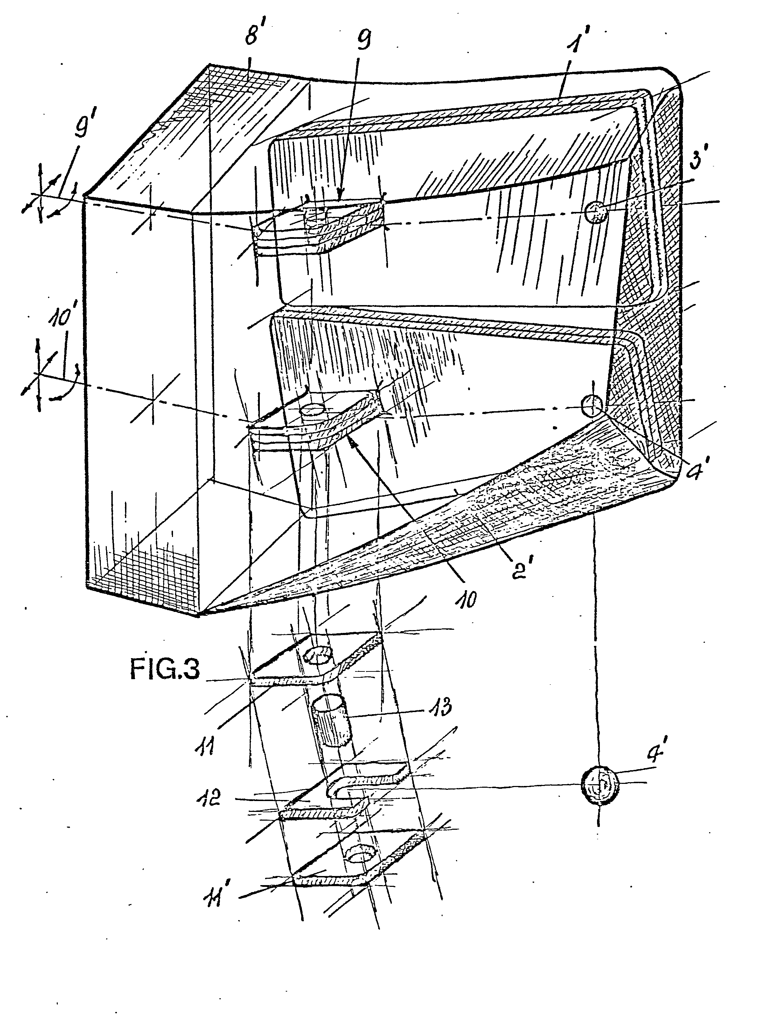

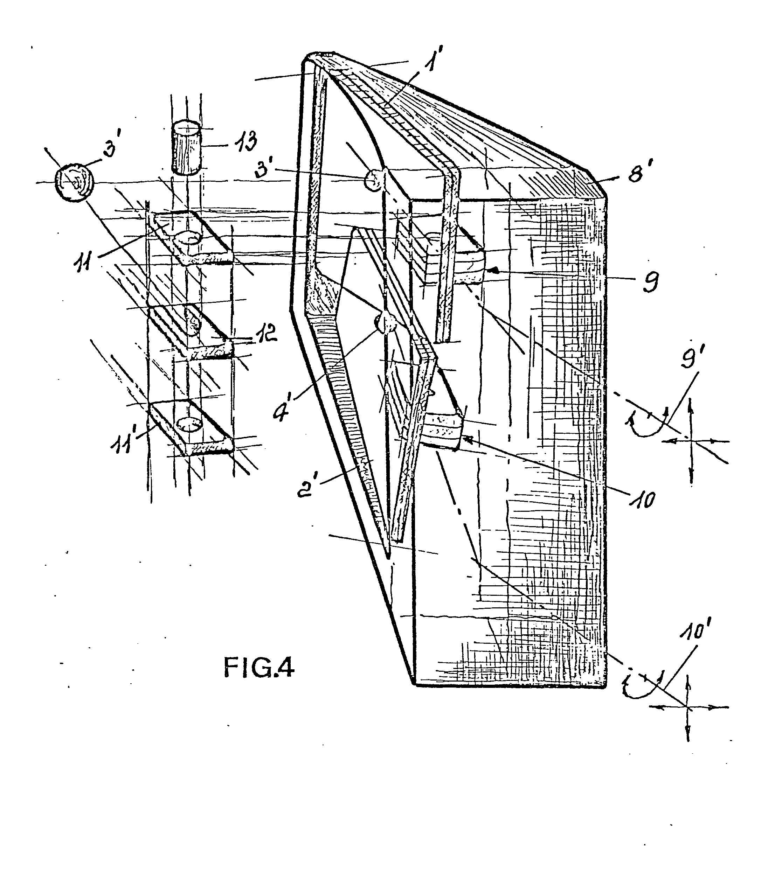

Un rétroviseur suivant l'invention peut aussi être réalisé suivant un type de rétroviseur réglable de l'intérieur du véhicule. On voit ainsi en figures 3 et 4 un rétroviseur conforme à l'invention, dont le carénage 8' se monte directement sur la portière. Dans ce rétroviseur les miroirs 1', 2' indépendants l'un de l'autre sont, d'une part, montés vers une extrémité sur une articulation à rotule 3', respectivement 4' et, d'autre part, pourvus à l'autre extrémité, côté véhicule, d'un organe de commande de pivotement 9, respectivement 10 relié à une tringle, schématiquement représentée en 9', 10', se prolongeant à l'intérieur du véhicule.

L'organe de commande de pivotement consiste, par exemple, en deux pattes perforées 11, 11' venues avec le miroir et enserrant entre elles un élément en U 12 porté par la tringle, un axe 13 traversant les trois pièces 11, 12, 11' pour solidariser l'ensemble.

Dans cette réalisation, on règle individuellement chaque miroir 1', 2' par leur tringle 9', respectivement 10' de l'intérieur du véhicule, de manière à obtenir ici aussi d'un miroir à l'autre une vision constante du véhicule jusqu'à la fin du dépassement.

Avec un rétroviseur réalisé conformément à l'invention, réglable de l'extérieur ou de l'intérieur du véhicule, la visibilité est pratiquement parfaite, il n'y a pas de déformation visuelle des véhicules et il n'y a plus d'erreur d'appréciation des distances. On obtient une vision aisée et complète des véhicules, par exemple lors de la montée sur autoroute ou encore de véhicules roulant sur la troi-

- 5 -

sième bande d'une autoroute.

Revendications

1.  Rétroviseur extérieur orientable, particulièrement pour véhicule automobile, caractérisé en ce qu'il est constitué de deux miroirs plans (1, 2 ou 1', 2'), de forme substantiellement rectangulaire, superposés et montés chacun de manière à permettre un réglage indépendant.

2.  Rétroviseur suivant la revendication 1, caractérisé en ce que chacun des miroirs (1, 2) est monté sur une articulation à rotule (3, 4) et en ce que le réglage s'effectue par simple poussée sur un ou les miroirs.

3.  Rétroviseur suivant la revendication 2, caractérisé en ce que les articulations à rotule (3, 4) sont portées par un support commun (5) relié par une articulation à rotule (6) à un bras de support (7) à fixer au véhicule.

4.  Rétroviseur suivant la revendication 1, caractérisé en ce que chacun des miroirs (1', 2') est monté sur une articulation à rotule (3', 4') vers son bord externe et est pourvu vers son bord interne d'un organe de commande de pivotement (9, 10) relié à une tringle (9', 10') se prolongeant à l'intérieur du véhicule.

5.  Rétroviseur suivant une ou plusieurs des revendications 1 à 4, caractérisé en ce que les deux miroirs plans superposés (1, 2 ou 1', 2') avec leur articulation à rotule (3, 4 ou 3', 4') sont enveloppés par un carénage approprié (8, 8').

1/3

0028860

FIG.1

FIG.2

FIG.3

FIG.4

Office européen
des brevets

## RAPPORT DE RECHERCHE EUROPEENNE

EP 80 20 1046.2

| Catégorie | DOCUMENTS CONSIDERES COMME PERTINENTS | | |
|---|---|---|---|
| | Citation du document avec indication, en cas de besoin, des parties pertinentes | Revendication concernée | |
| | DE – U – 1 950 997 (M. SCHLENTER) <br> * fig. 1 , 2 * <br><br> —— | 1,2,3 | |
| | DE – U – 1 897 293 (W. ARNOLD) <br> * fig. 2 * <br><br> —— | 1,2,3 | |
| | US – A – 3 644 021 (R.L. HAMBY) <br> * fig. 1, 2 * <br><br> —— | 1,2,3 | |
| | DE – A1 – 2 409 748 (INPAT PATENT-VERWERTUNGSGESELLSCHAFT) <br> * revendication 3 * <br><br> —— | 1,2 | |
| | FR – A5 – 2 239 865 (A. ASTORINO) <br> * fig. * <br><br> —— | 1,2 | |
| | DE – B2 – 2 357 287 (DAIMLER-BENZ) <br> * fig. 1 * <br><br> —— | 4 | |
| | DE – U – 1 931 112 (J. HEYEN) <br> * fig. * <br><br> ———— | 5 | |

**CLASSEMENT DE LA DEMANDE (Int. Cl.3)**

B 60 R    1/08

**DOMAINES TECHNIQUES RECHERCHES (Int. Cl.3)**

B 60 R    1/00

**CATEGORIE DES DOCUMENTS CITES**

X: particulièrement pertinent
A: arrière-plan technologique
O: divulgation non-écrite
P: document intercalaire
T: theorie ou principe à la base de l'invention
E: demande faisant interference
D: document cite dans la demande
L: document cité pour d'autres raisons

&: membre de la même famille, document correspondant

X | Le présent rapport de recherche a été établi pour toutes les revendications

| Lieu de la recherche | Date d'achèvement de la recherche | Examinateur |
|---|---|---|
| Berlin | 21-01-1981 | BECKER |

OEB Form 1503.1   06.78